# EUROPEAN PATENT APPLICATION

(11) **EP 4 084 292 A1**
(43) Date of publication of application: **02.11.2022**
(21) Application number: 20908301.3
(22) Date of filing: 16.12.2020
(51) Int. Cl.: H02K 1/18, B60K 7/00

(54) **ELECTRIC MOTOR, AUTOMOTIVE POWER APPARATUS PROVIDED WITH SAID ELECTRIC MOTOR, GENERATOR, AND GENERATOR-EQUIPPED WHEEL BEARING PROVIDED WITH SAID GENERATOR**

(30) Priority: 23.12.2019 JP 2019231054
(71) Applicant: NTN Corporation, Osaka-shi, Osaka 550-0003 (JP)
(72) Inventor: KAWAMURA, Mitsuo, Iwata-shi, Shizuoka 438-8510 (JP)
(74) Representative: Maikowski & Ninnemann Patentanwälte Partnerschaft mbB
(86) International application number: PCT/JP2020/046925
(87) International publication number: WO 2021/131951

(57) **Abstract**

Provided are an electric motor which can employ stator coils each having a large sectional area while providing an increased facing area between the magnets of the rotor and the stator, meet the requirements in terms of the radial and axial dimensions, and improve output; a vehicle power device including such an electric motor; a generator; and a generator-equipped wheel bearing including such a generator. The electric motor (1) is of an outer rotor type. The stator core (4) is divided into an annular part (7) and a plurality of teeth (8), each of the teeth (8) includes a distal end part and a tooth main part, the distal end part having a larger circumferential width than a circumferential width of the tooth main part, and the annular part (7) includes a plurality of fitting grooves in the circumferential direction on an outer peripheral surface thereof, each fitting groove extending in an axial direction and having a sectional shape with a narrowed part on an open side. Each of the teeth (8) includes, at a base end part thereof, a fitting part (8c) having a sectional shape that allows the fitting part to be fitted into a fitting groove, the fitting part inserted into the fitting groove of the annular part (7) in the axial direction to be fitted to the annular part (7) in an undetachable manner in a radial direction, and the fitting part (8c) has a maximum width in the circumferential direction smaller than the circumferential width of the tooth main part.

## Description

### CROSS REFERENCE TO THE RELATED APPLICATION

This application is based on and claims Convention priority to Japanese patent application No. 2019-231054, filed December 23, 2019, the entire disclosure of which is herein incorporated by reference as a part of this application.

### BACKGROUND OF THE INVENTION

### (Field of the Invention)

The present invention relates to an electric motor and an automotive or vehicle power device including such an electric motor, as well as a generator and a generator-equipped wheel bearing including such a generator, which are configured to be mounted in an automobile or the like.

### (Description of Related Art)

As for a wheel bearing device with an auxiliary power device which is installed in an automobile or the like, a technology has been proposed in which the wheel bearing device is provided with an electric motor that serves as a drive source for the auxiliary power device, within an axial range between a wheel bearing flange and an outboard side surface of a knuckle, and radially inward with respect to an outer peripheral part of a brake rotor (Patent Document 1).

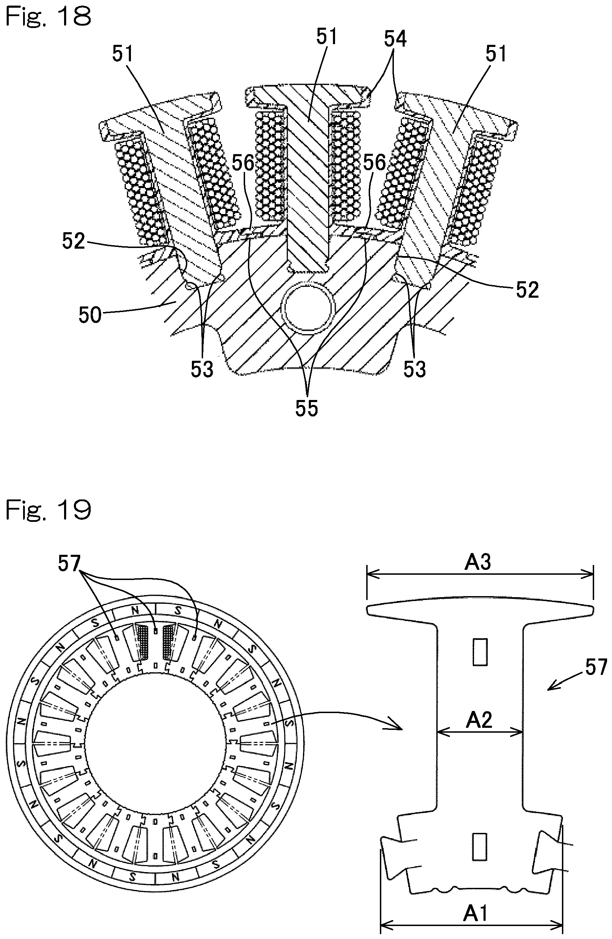

As shown in Fig. 18, a structure of an electric motor has been proposed in which a plurality of teeth 51 radially protruding at an equal angle interval are connected radially outside of an annular yoke 50 (Patent Document 2). In this structure, fitting projections 53 of fitting grooves 52 on a yoke side are fitted to fitting recesses of the respective teeth 51 to prevent the teeth 51 from falling in a radial direction. In addition, flanges 55, 56 of circumferentially adjacent bobbins 54 are alternately overlapped in a radial direction at their cut parts to prevent water penetration and the like to the yoke 50 and thereby secure insulation.

Besides, as shown in Fig. 19, an electric motor including divided cores 57 which have a same shape and are connected in a circumferential direction to constitute a single annular stator core has been proposed (Patent Document 3).

### [Related Document]

### [Patent Document]

[Patent Document 1] JP Laid-open Patent Publication No. 2018-52482
[Patent Document 2] JP Laid-open Patent Publication No. 2012-65510
[Patent Document 3] JP Patent No. 4286829

In Patent Document 1, it is necessary to maximize output torque in a limited space of an in-wheel motor having a direct structure without a reduction gear. Patent Document 1 uses a permanent magnet synchronous motor of an outer rotor type in which permanent magnets are arranged in an outer rotor and coils are arranged in an inner stator in order to increase an area in which a rotor and a stator face each other, so that torque is generated at an outer diametric side in a radial direction. The in-wheel motor, however, is also restricted in terms of the axial dimension, so that it is difficult to increase torque.

In Patent Document 2, as described above, it is necessary to prevent the respective teeth 51 from falling in the radial direction and to dispose the flanges 55, 56 in an overlapping manner in the radial direction. For this reason, attachment of the respective teeth 51 to the yoke 50 in the axial direction imposes difficulty in terms of manufacturing because this process requires that the respective components have highly precise dimensions. In the case of attachment of the teeth 51 to the yoke 50 in the radial direction, the stacking factor of the coils is reduced so as to prevent interference between the circumferentially adjacent coils. Therefore, it is difficult to improve output of the electric motor within a limited dimension.

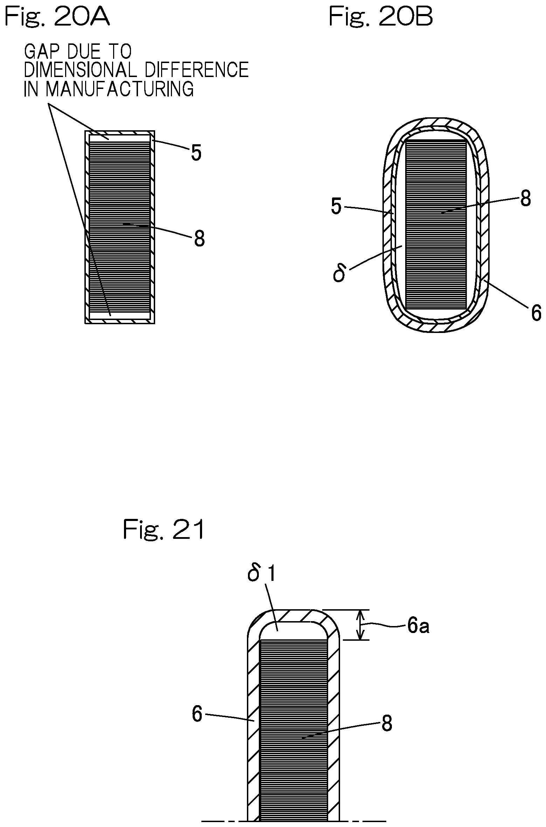

In Patent Document 3, as shown in Fig. 19, opposite end portions on inner and outer diametric sides have larger width dimensions A1, A3 than a circumferential width A2 of each tooth part, so that it is not possible to insert a coil and a bobbin onto the tooth part. Further, since each individual tooth part has a laterally non-symmetric shape, it is difficult to fix the tooth part for winding a coil thereon. As shown in Fig. 20A, in a coil winding process in which a coil 6 is wound around each tooth part with a bobbin 5 or the like for insulation interposed therebetween, if the coil 6 is wound strongly, the bobbin 5 is deformed to an elliptical shape due to dimensional difference between the tooth 8 and the bobbin 5 (Fig. 20B). In this case, a gap δ is generated over an entire periphery between the tooth 8 and the bobbin 5, which could impair heat conductivity. When the electric current is fed to the coil 6 during operation of the electric motor, the coil 6 generates heat. Where there is a gap δ between the tooth 8 and the bobbin 5, the heat of the coil 6 cannot be efficiently transmitted to the tooth 8, so that output of the electric motor cannot be improved.

An object of the present invention is to provide an electric motor, a vehicle power device including such an electric motor; a generator; and a generator-equipped wheel bearing including such a generator, which can employ stator coils each having a large sectional area while providing an increased facing area between the magnets of the rotor and the stator, meet the requirements in terms of the radial and axial dimensions, and improve output.

### SUMMARY OF THE INVENTION

An electric motor according to the present invention is an electric motor of an outer rotor type including: a stator including a stator core and stator coils wound around the stator core, the stator core including an annular part and a plurality of teeth in a circumferential direction which protrude from the annular part radially outward and around which the stator coils are wound; and a rotor facing the stator on a radially outside,
wherein the stator core is divided into the annular part and the plurality of teeth,
each of the teeth includes a distal end part and a tooth main part around which a stator coil is wound, the distal end part having a larger circumferential width than a circumferential width of the tooth main part,
the annular part includes a plurality of fitting grooves in the circumferential direction on an outer peripheral surface thereof, each fitting groove extending in an axial direction and having a sectional shape with a narrowed part on an open side,
each of the teeth includes, at a base end part thereof, a fitting part having a sectional shape that allows the fitting part to be fitted into a fitting groove, the fitting part inserted into the fitting groove of the annular part in the axial direction to be fitted to the annular part in an undetachable manner in a radial direction, and
the fitting part has a maximum width in the circumferential direction smaller than the circumferential width of the tooth main part.

According to this constitution, since the distal end part of each tooth has a larger circumferential width than the circumferential width of the tooth main part, there is an increased area in which a distal end of the stator faces the magnets, as compared with a case where a radial end part of each tooth is linear in the radial direction, so that magnetic flux of the rotor can be effectively used. Thus, it is possible to increase torque of the electric motor and to reduce cogging torque of the electric motor.

As for the case of an integrated stator, since it is necessary to introduce stator coils, a nozzle for injecting the stator coils and the like through gaps between adjacent teeth in the circumferential direction, the stator coils cannot be wound thicker than the gaps between the distal end parts of the adjacent teeth in the circumferential direction. According to the constitution of the present invention, the stator core is divided into the annular part and the plurality of teeth, so that the stator coils and the like can be fitted to the respective teeth before attached to the annular part. Thus, it is possible to use the stator coils each having a larger sectional area than the gap between the distal end parts of the adjacent teeth in the circumferential direction.

Since the fitting part of the base end part of each tooth has the maximum width in the circumferential direction smaller than the circumferential width of the tooth main part, the stator coil and the like can be easily fitted from the side of the base end part of each tooth in the separate state. In this case, it is possible to wind the stator coil around the tooth main part while appropriately maintaining the shape of a member that secures insulation between the stator coil and the tooth. For example, it is possible to first wind the stator coil around the member that secures insulation and then insert the stator coil and the like from the side of the base end part of each tooth so as to easily control the dimension of the member that secures insulation and properly control the gap between the tooth and the member inserted onto the tooth. Therefore, thanks to the properly controlled gaps between the respective teeth and the members inserted onto the teeth, heat of the stator coils generated when electric current is fed to the stator coils during operation of the electric motor can be efficiently transmitted to the teeth. Further, since the fitting parts of the respective teeth are inserted into the fitting grooves of the annular part in the axial direction, the adjacent stator coils in the circumferential direction can be reliably prevented from interfering each other, while the stacking factor of the coils can be improved. By controlling the gaps and improving the stacking factor of the coils, output of the electric motor can be improved. Since the annular part includes the fitting grooves arranged on the outer peripheral surface thereof, each fitting groove extending in the axial direction and having the sectional shape including the narrowed part on the open side, and each tooth includes, in the base end part thereof, the fitting part having the sectional shape for fitting into the fitting groove, it is possible to realize the structure in which the respective teeth are fitted to the annular part in an undetachable manner in the radial direction and to easily attach the respective teeth to the annular part in the axial direction. Thus, it is possible to use the stator coils each having a large sectional area while increasing an area in which the magnets of the rotor face the stator, to meet the requirements in terms of the radial and axial dimensions, and to improve output of the electric motor.

Each of the teeth with the stator coil wound around the tooth main part may be inserted into a fitting groove of the annular part in the axial direction. In this case, the adjacent stator coils in the circumferential direction can be prevented from interfering each other.

The fitting part of each of the teeth may include a neck part that is fitted to a narrowed part of the annular part and a protruding part that protrudes on an inner diametric side toward opposite sides in the circumferential direction with respect to the neck part in the radial direction, the neck part and the protruding part forming a T-shape when viewed in the axial direction, and each of the fitting grooves of the annular part may have a T-shaped sectional shape corresponding to the protruding part and the neck part of the fitting part. The above-described shapes of the respective fitting parts of the teeth and the respective fitting groove of the annular part make it possible to easily realize the structure in which the respective teeth are fitted to the annular part in an undetachable manner in the radial direction.

In each of the teeth, the circumferential width of the distal end part may be 1.1 times to 2.6 times of the circumferential width of the tooth main part. In this case, output of the electric motor can be improved as compared with an electric motor in which the circumferential width of the distal end part of each tooth is equal to the circumferential width of the tooth main part.

Each of the teeth may have a stepped shape in which opposite end portions of the tooth main part in the axial direction are narrower than a middle portion of the tooth main part in the axial direction. Since a stator coil having a large sectional area has poor flexibility regardless of whether it is a round coil or a rectangular coil, it is difficult to bend the wire with a small radius of curvature. Therefore, a gap is generated between the stator coil and the tooth at the coil end parts, and the electric motor thus has an extra axial dimension that does not contribute to improvement in output of the electric motor. Where the tooth main part is narrowed in the opposite end portions in the axial direction with respect to the middle portion in the axial direction to have a stepped shape, the coil end parts can be made smaller by the axially projection that does not contribute to improvement in output of the electric motor to reduce the axial dimension of the stator coil.

In the stepped shape of the tooth main part, each of a step dimension in the axial direction and a step dimension in the circumferential width direction may be 0.5 times or more of a coil width dimension in a section of the stator coil along a plane perpendicular to the radial direction of the tooth around which the stator coil is wound. In this case, the insulation coating on the surfaces of the bent stator coils will not be broken, or the function of the electric motor will not be deteriorated.

A vehicle power device according to the present invention includes: a wheel bearing including a stationary ring and a rotary ring rotatably supported by the stationary ring through rolling elements, the rotary ring including a hub flange configured to be attached with a wheel of a vehicle; and the electric motor according to any one of the above inventions, the electric motor attached to the wheel bearing, wherein the stator is attached to the stationary ring, and the rotor is attached to the rotary ring. In this case, the electric motor attached to the wheel bearing can improve driving performance and braking performance to reduce fuel consumption. In addition, the above-described effects of the electric motor according to the present invention can be obtained.

The wheel and a brake rotor may be attached to the hub flange, and the electric motor may be arranged radially inward with respect to an inner diameter of the brake rotor and within an axial range between the hub flange and an outboard side surface of a chassis frame component of the vehicle. In this case, the electric motor can be arranged by effectively taking advantage of the space located radially inward with respect to the inner diameter of the brake rotor and within an axial range between the hub flange and the outboard side surface of the chassis frame component.

A generator according to the present invention is a generator of an outer rotor type including: a stator including a stator core and stator coils wound around the stator core, the stator core including an annular part and a plurality of teeth in a circumferential direction which protrude from the annular part radially outward and around which the stator coils are wound; and a rotor facing the stator on a radially outside,
wherein the stator core is divided into the annular part and the plurality of teeth,
each of the teeth includes a distal end part and a tooth main part around which a stator coil is wound, the distal end part having a larger circumferential width than a circumferential width of the tooth main part,
the annular part includes a plurality of fitting grooves in the circumferential direction on an outer peripheral surface thereof, each fitting groove extending in an axial direction and having a sectional shape with a narrowed part on an open side,
each of the teeth includes, at a base end part thereof, a fitting part having a sectional shape that allows the fitting part to be fitted into a fitting groove, the fitting part inserted into the fitting groove of the annular part in the axial direction to be fitted to the annular part in an undetachable manner in a radial direction, and
the fitting part has a maximum width in the circumferential direction smaller than the circumferential width of the tooth main part.

According to this constitution, since the distal end part of each tooth has a larger circumferential width than the circumferential width of the tooth main part, there is an increased area in which a radial end of the stator faces the magnets, as compared with a case of a linear tooth, so that magnetic flux of the rotor can be effectively used. Thus, it is possible to increase torque of the generator and to reduce cogging torque of the generator. Since the stator core is divided into the annular part and the plurality of teeth, the stator coils and the like can be fitted to the respective teeth before attached to the annular part. Thus, it is possible to use the coils each having a larger sectional area than the gap between the distal end parts of the adjacent teeth in the circumferential direction.

Since the fitting part of the base end part of each tooth has the maximum width in the circumferential direction smaller than the circumferential width of the tooth main part, the stator coil and the like can be easily fitted from the side of the base end part of the tooth in the separate state. In this case, it is possible to wind the stator coil around the tooth main part while appropriately maintaining the shape of a member that secures insulation between the stator coil and the tooth. For example, it is possible to first wind the stator coil around the member that secures insulation and then insert the stator coil and the like from the side of the base end part of each tooth so as to easily control the dimension of the member that secures insulation and properly control the gap between the tooth and the member inserted onto the tooth. Therefore, thanks to the properly controlled gaps between the respective teeth and the members inserted onto the teeth, heat of the stator coils generated when electric current is fed to the stator coils during operation of the generator can be efficiently transmitted to the teeth. Further, since the fitting parts of the respective teeth are inserted into the fitting grooves of the annular part in the axial direction, the adjacent stator coils in the circumferential direction can be reliably prevented from interfering each other, while the stacking factor of the coils can be improved. By controlling the gaps and improving the stacking factor of the coils, output of the generator can be improved. Since the annular part includes the fitting grooves arranged on the outer peripheral surface thereof, each fitting groove extending in the axial direction and having the sectional shape including the narrowed part on the open side, and each tooth includes, in the base end part thereof, the fitting part having the sectional shape for fitting into the fitting groove, it is possible to realize the structure in which the respective teeth are fitted to the annular part in an undetachable manner in the radial direction and to easily attach the respective teeth to the annular part in the axial direction. Thus, it is possible to use the stator coils each having a large sectional area while increasing an area in which the magnets of the rotor face the stator, to meet the requirements in terms of the radial and axial dimensions, and to improve output of the generator.

A generator-equipped wheel bearing device according to the present invention includes: a wheel bearing including a stationary ring and a rotary ring rotatably supported by the stationary ring through rolling elements, the rotary ring including a hub flange configured to be attached with a wheel of a vehicle; and the generator according to any one of the above inventions, the generator attached to the wheel bearing, wherein the stator is attached to the stationary ring, and the rotor is attached to the rotary ring. In this case, the generator attached to the wheel bearing can reduce fuel consumption. In addition, the above-described effects of the generator according to the present invention can be obtained.

The present invention encompasses any combination of at least two features disclosed in the claims and/or the specification and/or the drawings. In particular, any combination of two or more of the appended claims should be equally construed as included within the scope of the present invention.

### BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like or corresponding parts throughout the several views.
Fig. 1 is a sectional view of an electric motor according to an embodiment of the present invention;
Fig. 2 is a plan view of the electric motor;
Fig. 3 is a front view of the electric motor;
Fig. 4 is an enlarged sectional view showing the electric motor in a partially enlarged manner;
Fig. 5 is a plan view of an annular part of a stator core of a stator;
Fig. 6 shows a tooth of the stator core as viewed in an axial direction;
Fig. 7A shows a relation between the proportion of output torque and the value calculated by dividing a circumferential width of a distal end part of the tooth by a circumferential width of a tooth main part;
Fig. 7B shows a width dimension of the tooth in connection with Fig. 7A;
Fig. 8A illustrates a radial dimension and the like of the distal end part of the tooth;
Fig. 8B illustrates a direction in which the tooth of Fig. 8A is pushed;
Fig. 9A illustrates an exemplary assemblage of the tooth and a stator coil or the like;
Fig. 9B illustrates an exemplary assemblage of the tooth and a stator coil or the like;
Fig. 9C illustrates an exemplary assemblage of the tooth and a stator coil or the like;
Fig. 10 is a perspective view showing a process of inserting a fitting part of a tooth into a fitting groove of the annular part in the axial direction;
Fig. 11 illustrates a stator of an electric motor according to another embodiment of the present invention in a partially enlarged manner;
Fig. 12 illustrates a tooth of the electric motor in a partially enlarged manner;
Fig. 13 is an enlarged sectional view of a part of the tooth around which the stator coil is wound;
Fig. 14 illustrates an exemplary assemblage of the tooth and a stator coil or the like;
Fig. 15 is a perspective view showing a process of inserting a fitting part of the tooth into a fitting groove of an annular part in an axial direction;
Fig. 16 illustrates an exemplary assemblage of a tooth and a stator coil or the like of an electric motor according to yet another embodiment of the present invention;
Fig. 17 is a sectional view of a vehicle power device including one of the electric motors;
Fig. 18 is a partially enlarged sectional view of a stator of an electric motor of a conventional example;
Fig. 19 shows an exemplary shape of a divided core of another conventional example;
Fig. 20A illustrates a problem of an electric motor of yet another conventional example;
Fig. 20B illustrates a state in which a further gap is generated as compared with the state shown in Fig. 20A; and
Fig. 21 is a partially enlarged sectional view showing an example for comparison without stepped parts in a tooth.

### DESCRIPTION OF THE EMBODIMENTS

### First Embodiment

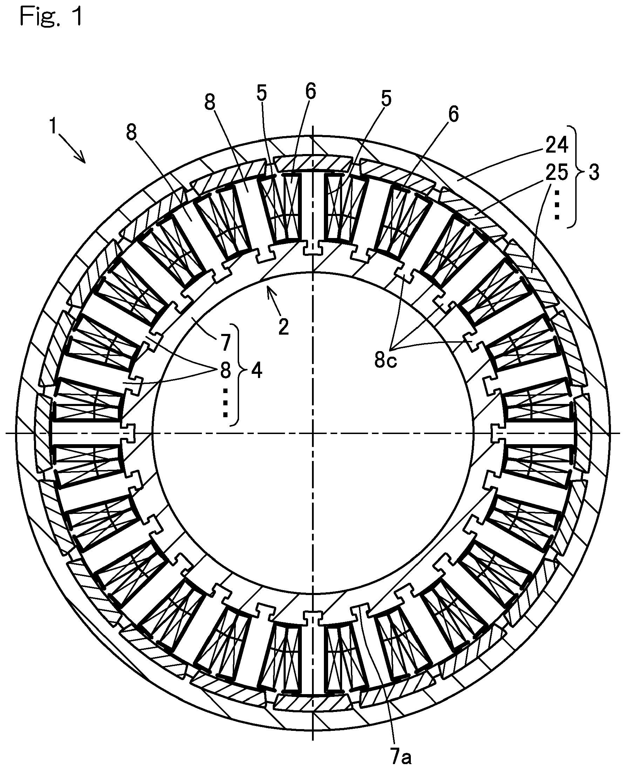

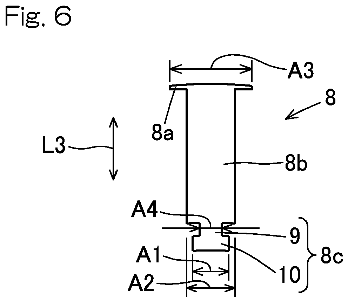

An electric motor according to an embodiment of the present invention will be described with reference to Fig. 1 to Fig. 10. The electric motor is, for example, incorporated in a vehicle power device which is an in-wheel motor drive device having a direct drive structure.

### <Basic Structure of Electric Motor>

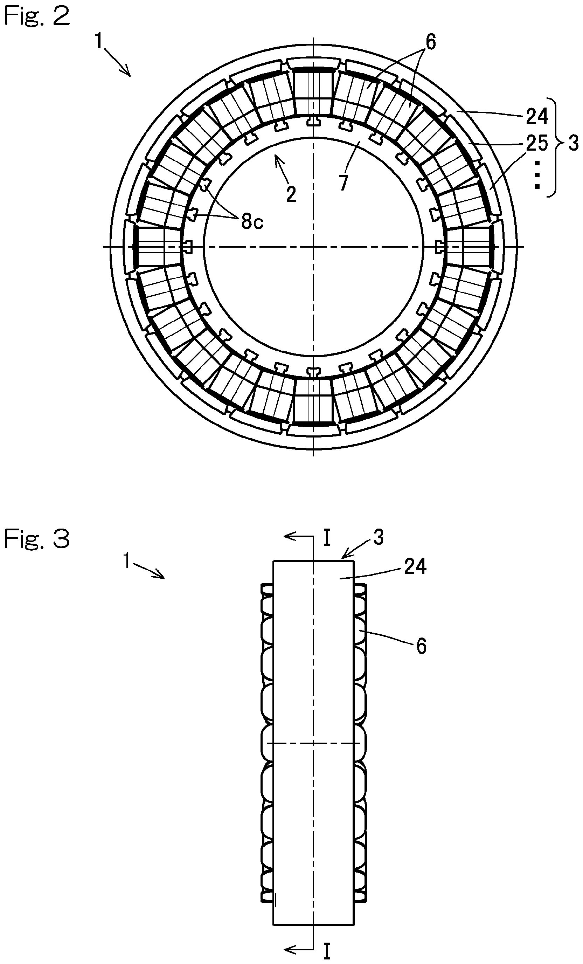

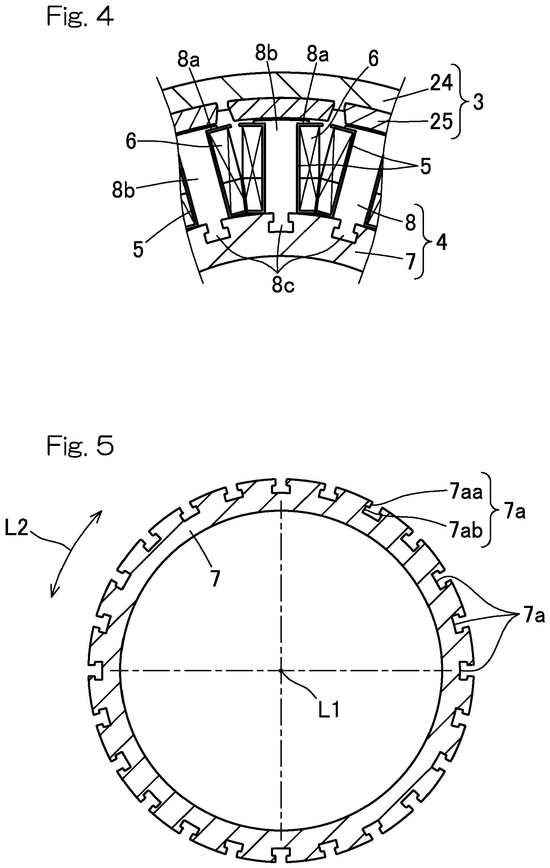

As shown in Fig. 1 to Fig. 3, the electric motor 1 of the present embodiment is a surface permanent magnet electric motor of an outer rotor type including an annular stator 2 having a divided structure and a rotor 3 facing the stator 2 on a radially outside. Fig. 1 is a sectional view along line I-I of Fig. 3. As shown in Fig. 1 and Fig. 4, the stator 2 includes a stator core 4 and stator coils 6 wound around the stator core 4 with bobbins 5 interposed therebetween. The stator core 4 includes an annular part 7 and a plurality of teeth 8 which are arranged in a circumferential direction and protrude from the annular part 7 outward in a radial direction and around which the stator coils 6 are wound. The rotor 3 includes a magnetic body 24 having a cylindrical shape and a plurality of permanent magnets 25 located on an inner peripheral surface of the magnetic body 24 at equal intervals in the circumferential direction.

### <Features of Electric Motor>

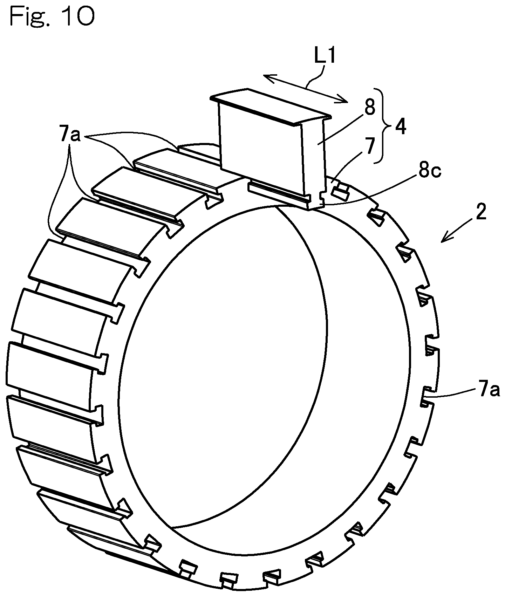

As shown in Fig. 4 to Fig. 6, the stator core 4 has a divided structure including the annular part 7 and the respective teeth 8, in which each tooth 8 has a distal end part 8a extending toward opposite sides in the circumferential direction with respect to a tooth main part 8b. Each tooth 8 has a fitting part 8c at a base end portion thereof, the fitting part having a smaller maximum circumferential width A1 than a circumferential width A2 of the tooth main part 8b. Further, as shown in Fig. 10, the fitting part 8c of each tooth 8 is structured such that the fitting part is inserted into a fitting groove 7a of the annular part 7 in an axial direction L1.

### <Details of Structure>

As shown in Fig. 4 to Fig. 6, the tooth main part 8b of each tooth 8, which is the central part around which the stator coil 6 is wound, has a constant circumferential width A2. The circumferential width A2 of the tooth main part 8b may also be referred to as "tooth width A2." The distal end part 8a of each tooth 8 has a circumferential width (T-shape width) A3, i.e., a width of an outer-diametric-side end portion thereof facing the rotor 3, larger than the tooth width A2, so that each tooth has the T-shape formed by the distal end part 8a and the tooth main part 8b.

The annular part 7 includes a plurality of fitting grooves 7a arranged in the circumferential direction L2 on an outer peripheral surface thereof, each fitting groove extending in the axial direction and having a sectional shape with a narrowed part 7aa on an open side and a widened part 7ab on a groove bottom side. The sectional shape means the shape of a section of the annular part 7 along a plane perpendicular to the axial direction (Fig. 5). Each tooth 8 includes, at a base end part thereof, a fitting part 8c having a sectional shape that allows the fitting part to be fitted into a fitting groove 7a of the annular part 7. The sectional shape means the shape of a section of the tooth 8 along a plane perpendicular to the axial direction L1. The material and the production method for the annular part 7 and the respective teeth 8 can be selected as appropriate. For example, a plurality of thin plate-like electromagnetic steel sheets may be overlaid in the axial direction L1 and then be united by fastening, bonding, welding, etc., or a dust core may be used. It is also possible to form the teeth 8 or the teeth 8 together with the bobbins 5 by insert molding.

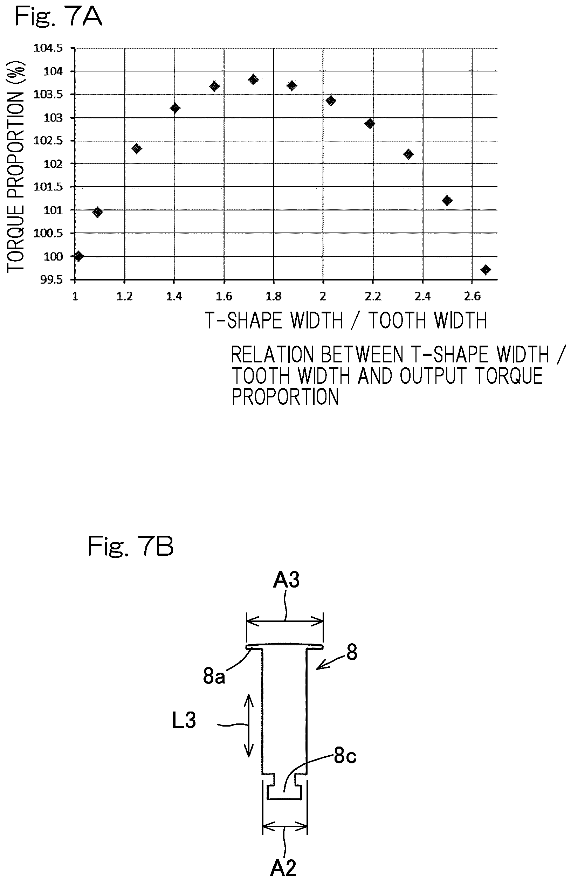

The fitting parts 8c of the teeth 8 are inserted into the respective fitting grooves 7a of the annular part 7 in the axial direction L1 and are fitted to the annular part 7 so as to be undetachable in the radial direction L3 (Fig. 7B). The fitting part 8c of each tooth 8 includes a neck part 9 and a protruding part 10. The neck part 9 is fitted to a narrowed part 7aa of the annular part 7. The protruding part 10 protrudes toward opposite sides in the circumferential direction on the inner diametric side with respect to the neck part 9 in the radial direction and is fitted to a widened part 7ab of the annular part 7. The fitting part 8c has a T-shape formed by the neck part 9 and the protruding part 10 when viewed in the axial direction and is shaped so as to fit in a fitting groove 7a of the annular part 7. The fitting groove 7a of the annular part 7 has a T-shaped section that is formed by the narrowed part 7aa and the widened part 7ab and corresponds to the neck part 9 and the protruding part 10 of the fitting part 8c. The protruding part 10 has the larger circumferential width A1 than a circumferential width A4 of the neck part 9. Further, in the fitting part 8c, the circumferential width A1 of the protruding part 10, which is the maximum width in the circumferential direction L2, is smaller than the circumferential width A2 of the tooth main part 8b.

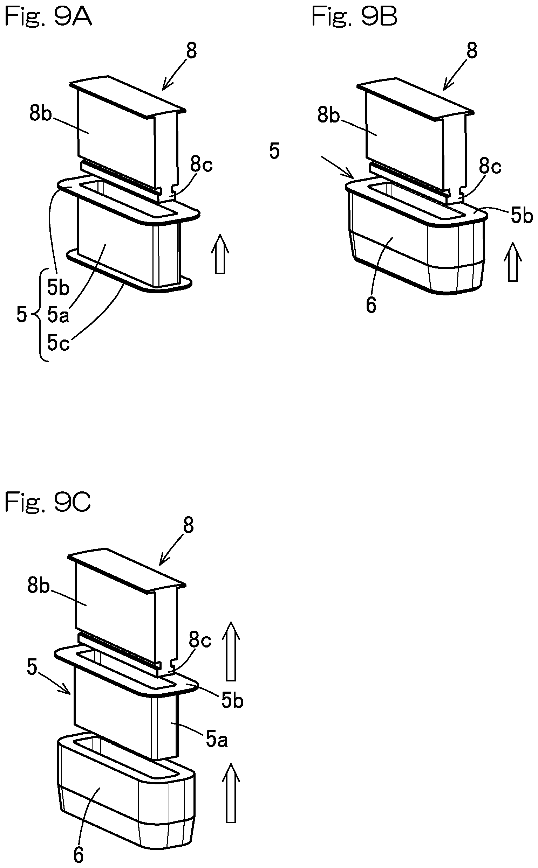

As shown in Fig. 4 and Fig. 9A to Fig. 9C, each bobbin 5 is attached with a stator coil 6 and is made of an insulation material that secures insulation between the stator coil 6 and the stator core 4. Each bobbin 5 includes: a bobbin body 5a having a rectangular column shape into which a tooth 8 can be inserted; and outer-diametric-side and inner-diametric-side flange parts 5b, 5c each having a flange shape and extending from either edge portion of the bobbin body 5a. The stator coil 6 is fitted to an annular space delimited by an outer surface of the bobbin body 5a, a radially inner surface of the outer-diametric-side flange part 5b, and a radially outer surface of the inner-diametric-side flange part 5c.

### <Dimensions of Respective Parts>

In each tooth 8, the circumferential width A3 of the distal end part 8a is 1.1 times to 2.6 times of the circumferential width A2 of the tooth main part 8b. As an example, Fig. 7A shows a graph indicating the relation between the torque of the electric motor and the value calculated by dividing the circumferential width (T-shape width) A3 of the distal end part 8a of the tooth 8 by the tooth width A2. In Fig. 7A, the horizontal axis indicates the T-shape width / tooth width, and the vertical axis indicates the torque proportion, wherein the torque when the T-shape width / tooth width is "1" is set to 100%.

In this example, as compared with the case where the distal end part 8a of the tooth 8 is not T-shaped (indicated at the left end on the horizontal axis), the torque is increased in a range of the T-shape width / tooth width up to "2.6." This is because of the increased area in which the magnets of the rotor face the stator. Fig. 7A shows analytical results of an electric motor having a certain shape. In general, there is an optimum value for the T-shape width at which the torque can be maximized, although the torque peak position varies depending on the specification of the electric motor.

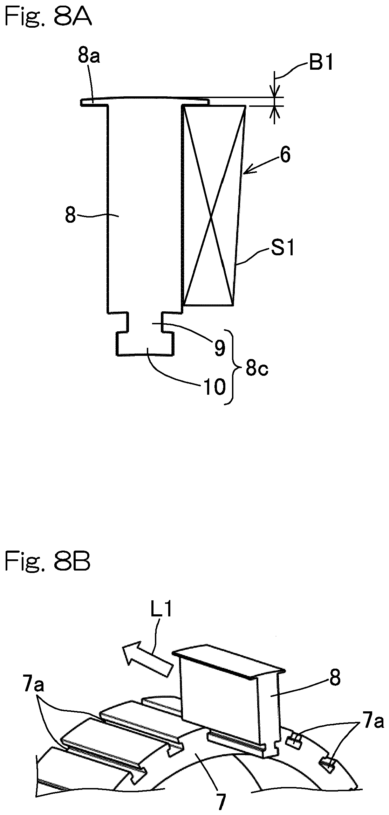

As shown in Fig. 8A, the distal end part 8a of each tooth 8 has a radial dimension B1 of from 0.7 mm to 3.0 mm. Where the distal end part 8a has a radial dimension B1 smaller than 0.7 mm, the distal end part does not have a part for being pushed when the tooth 8 are fitted to the annular part 7, so that the tooth 8 cannot be pushed into the fitting groove 7a in the axial direction L1 (Fig. 8B). If the tooth 8 is push in the axial direction L1 by using only the fitting part 8c of each tooth 8 which is provided on the inner diametric side for fitting to the annular part 7, the tooth 8 may not move parallel to the axial direction L1 and thus become inclined, which tends to result in abnormality in the fitting part 8c. Further, if the load is applied to a single point of the tooth 8, the layers of the electromagnetic steel sheets may be disintegrated at a point axisymmetric to the point of load application. Where the distal end part 8a has a too large radial dimension B1, on the other hand, each tooth has a smaller sectional area S 1 or volume around which the stator coil 6 is wound, so that the torque of the electric motor is reduced. For this reason, the upper limit for the radial dimension B1 of the distal end part 8a is set to 3.0 mm.

### <Exemplary Assembly of Teeth, Stator Coils, etc.>

Fig. 9A to Fig. 9C show exemplary assembly of a bobbin 5 and a stator coil 6 to a tooth 8. Since the fitting part 8c of the tooth 8 has a maximum width smaller than the tooth width of the tooth main part 8b, the bobbin 5 and the stator coil 6 can be easily inserted from the inner diametric side of the stator.

As shown in Fig. 9A, the bobbin 5 may be fitted to the tooth 8 from the inner diametric side of the stator, and then the stator coil may be wound around the bobbin 5. In this case, it is possible to use the bobbin 5 also having the flange part 5c on the inner diametric side of the stator, which can secure insulation between the stator coil and the stator core with fewer components and in fewer steps.

As shown in Fig. 9B, the stator coil 6 may be wound around the bobbin 5 before the bobbin is fitted to the tooth 8. In this case, it is possible to wind the stator coil 6 while appropriately maintaining the shape of the bobbin 5.

As shown in Fig. 20A, in a process of fitting a bobbin 5 to a tooth 8 and then winding a stator coil, if the stator coil is strongly wound, the bobbin 5 is deformed to an elliptical shape due to the dimensional difference between the tooth 8 and the bobbin 5, creating a gap δ between the tooth 8 and the bobbin 5 as shown in Fig. 20B. That is, if the stator coil 6 is strongly wound, the bobbin 5 is brought into strong contact with the corners of the tooth 8, so that the bobbin 5 is deformed to an elliptical shape, creating a gap δ over the entire perimeter. This gap δ could considerably reduce heat conductivity of the stator.

When the electric motor operates, electric current is fed to the stator coils 6, so that the stator coils 6 generate heat. Efficient heat transmission from the stator coils 6 to the teeth 8 can lower the coil temperature, so that output of the electric motor can be improved. Gaps between the bobbins 5 and the teeth 8 as shown in Fig. 20B impedes transmission of the heat of the stator coils 6 to the teeth 8.

Thus, as shown in Fig. 9B, it is possible to first wind the stator coil 6 around the bobbin 5 so as to easily control the dimension of the bobbin 5 and properly control the gap for insertion of the tooth 8. As shown in Fig. 9C, it is possible to insert a bobbin 5 and an air-core stator coil 6 shaped in a winding form (an air-core coil constituted by a winding coil only) onto a tooth 8. In this case, it is not necessary to fix the bobbin 5 and the tooth 8 when winding the coil, and thus, it is possible to employ an arbitrary winding section and an arbitrary winding process without difficulty. Further, this can make it easy to attach the bobbin 5 and the stator coil 6 onto the tooth 8, without requiring the bobbin 5 to have a divided shape or the like.

### <Exemplary Assembly of Stator>

Fig. 10 shows an exemplary assembly of the stator 2. As shown in Fig. 9A to Fig. 9C and Fig. 10, each tooth 8 with the stator coil 6 wound around the tooth main part 8b is inserted into a fitting groove 7a of the annular part 7 in the axial direction L1. That is, the fitting part 8c of each tooth 8 is press-fitted into a fitting groove 7a on the outer peripheral surface of the annular part 7 in the axial direction L1 of the electric motor to assemble the stator core 4. Although illustration is omitted in Fig. 10, the fitting parts 8c of the teeth 8 with the bobbins and the stator coils attached to the teeth 8 are press-fitted into the fitting grooves 7a of the annular parts 7 to construct them into the form of the stator, and then, the wires of the respective stator coils are connected to form a stator assembly.

### <Effects and Advantages>

According to the electric motor 1 as described above, since the distal end part 8a of each tooth 8 has the larger circumferential width A3 than the circumferential width A2 of the tooth main part 8b, there is an increased area in which a radial end of the stator 2 faces the magnets 25 as compared with a tooth including a linear distal end part in the radial direction, so that magnetic flux of the rotor 3 can be effectively used. Thus, it is possible to increase torque of the electric motor 1 and to reduce cogging torque of the electric motor.

Since the stator core 4 is divided into the annular part 7 and the plurality of teeth 8, the stator coils 6 and the bobbins 5 can be fitted to the respective teeth 8 before attached to the annular part 7. Therefore, it is possible to use the stator coils 6 each having a larger sectional area than the gap between the distal end parts 8a of the adjacent teeth 8 in the circumferential direction.

Since the fitting part 8c of the base end part of each tooth 8 has the maximum width A1 in the circumferential direction smaller than the tooth width A2 of the tooth main part 8b, the stator coil 6 and the bobbin 5 can be easily fitted from the side of the base end part of the tooth 8 in the separate state. In this case, it is possible to wind the stator coil 6 around the tooth main part 8b while appropriately maintaining the shape of the bobbin 5. This makes it easy to control the dimension of the bobbin 5 and to properly control the gap between the bobbin 5 and the tooth 8. Thus, during operation of the electric motor 1, heat of the stator coils 6 can be efficiently transmitted to the teeth 8. Further, since the fitting parts 8c of the respective teeth 8 are inserted in the axial direction, the adjacent stator coils 6 in the circumferential direction can be reliably prevented from interfering each other, while the stacking factor of the coils can be improved. By controlling the gap and improving the stacking factor of the coils, output of the electric motor 1 can be improved. Since the annular part 7 includes the fitting grooves 7a arranged on the outer peripheral surface thereof, each fitting groove extending in the axial direction and having the sectional shape including the narrowed part 7aa on the open side, and each tooth 8 includes, in the base end part thereof, the fitting part 8c having the sectional shape for fitting into the fitting groove 7a, it is possible to realize the structure in which the respective teeth 8 are fitted to the annular part 7 in an undetachable manner in the radial direction and to easily attach the respective teeth 8 to the annular part 7 in the axial direction. The respective teeth 8 with the stator coils 6 wound around the tooth main parts 8b are inserted into the fitting grooves 7a of the annular part 7 in the axial direction L1, so that the adjacent stator coils 6 in the circumferential direction can be prevented from interfering each other. Thus, it is possible to use the stator coils 6 each having a large sectional area while increasing an area in which the magnets 25 of the rotor 3 face the stator 2, to meet the requirements in terms of the radial and axial dimensions, and to improve output of the electric motor 1.

### <Other Embodiments>

In the following description, the same reference numerals are used to denote parts that correspond to those previously described in the respective embodiments, and overlapping description is omitted. Where only a part of a configuration is described, the rest of the configuration is to be construed as being the same as the previously described embodiments unless otherwise indicated. The same configurations provide the same effects. It is possible not only to combine the parts that have been particularly described in the respective embodiments but also to partly combine the embodiments unless there is any hindrance to such a combination.

### <Exemplary Shape of Stepped Teeth>

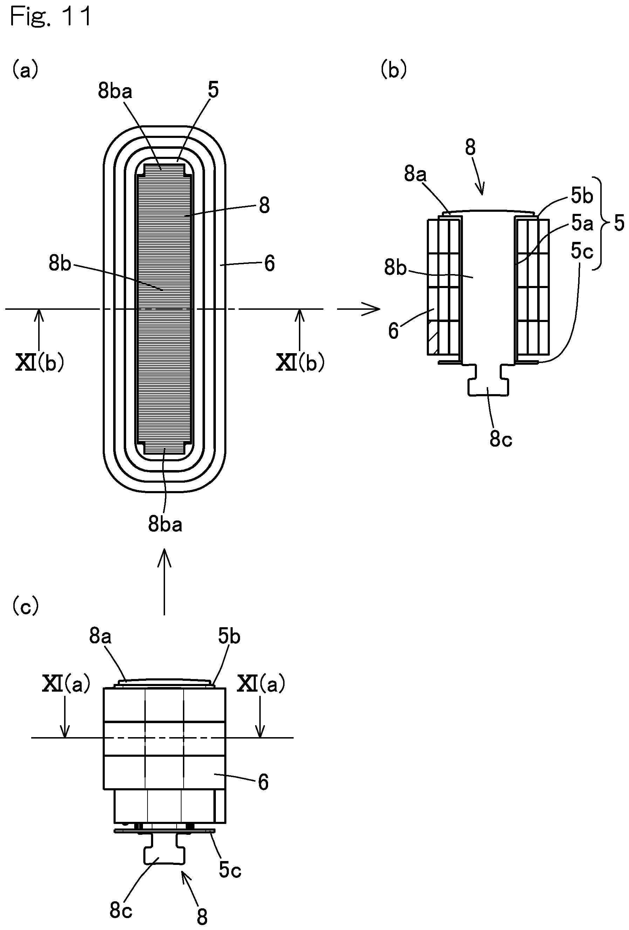

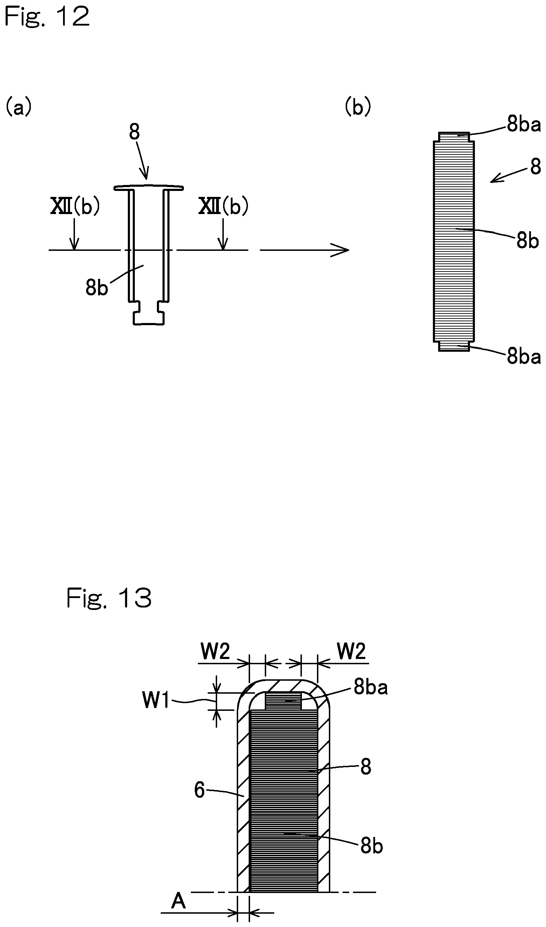

As shown in Fig. 11 to Fig. 15, each tooth 8 may have a stepped shape in which opposite end portions 8ba of the tooth main part 8b in the axial direction are narrower than a middle portion of the tooth main part in the axial direction. Fig. 11(a) is a sectional view of a tooth 8 with a bobbin 5 and a stator coil 6 fitted thereto (i.e., a sectional view along line XI(a)-XI(a) of Fig. 11(c)). Fig. 11(b) is a sectional view along line XI(b)-XI(b) of Fig. 11(a). Fig. 11(c) shows the tooth 8 with the bobbin 5 and the stator coil 6 fitted thereto as viewed in the axial direction. Fig. 12(a) shows a tooth 8 as viewed in the axial direction, and Fig. 12(b) is a sectional view along line XII(b)-XII(b) of Fig. 12(a).

As shown in Fig. 12 and Fig. 13, in the stepped shape of the tooth main part 8b, each of a step dimension W1 in the axial direction and a step dimension W2 in a circumferential width direction is 0.5 times or more of a coil radial projection width A. The coil radial projection width A refers to a width dimension that incorporates bending deformation of the coil wires (or refers to a coil diameter in the case of a round coil), or more specifically refers to a coil width dimension in a section of the stator coil 6 cut along a plane perpendicular to the radial direction of the tooth 8 around which the stator coil 6 is wound.

Since a stator coil having a large sectional area has poor flexibility regardless of whether it is a round coil or a rectangular coil, it is difficult to bend the wire with a small radius of curvature. Therefore, as shown in Fig. 21, a gap δ1 is generated between the stator coil 6 and the tooth 8 at the coil end part 6a, and the electric motor thus has an extra axial dimension that does not contribute to improvement in output of the electric motor. For this reason, as shown in Fig. 12 and Fig. 13, the tooth main part 8b is narrowed in the opposite end portions 8ba in the axial direction with respect to the middle portion in the axial direction to have a stepped shape, so that the coil end parts can be made smaller by the axially projection that does not contribute to improvement in output of the electric motor to reduce the axial dimension of the stator coil 6.

Bending associated with winding the stator coils with a small radius of curvature may result in breakage of insulation coating on the coil surfaces, which could cause electrical conduction between the teeth and the stator coils or between the stator coils and thus deteriorate the function of the electric motor. Although an insulator is typically interposed between the stator coils and the teeth, insulation between the stator coils and the stator core tends to be easily impaired at edge parts of the teeth because of a smallest creepage distance between the teeth and the stator coils.

To address this, in the stepped shape of the tooth main part 8b, each of the step dimension W1 in the axial direction and the step dimension W2 in the circumferential width direction may be 0.5 times or more of the coil radial projection width A. This makes it possible to wind the coils without breaking the insulation coating on the inner and outer diametric surfaces of the bent stator coils 6. However, if the step dimensions W1, W2 of the tooth main part 8b are made too large, the volume of the electromagnetic steel sheets of each tooth 8 is reduced, leading to reduction in torque of the electric motor.

Although not illustrated, a combination of electromagnetic steel sheets having a plurality of tooth width dimensions may be used to form one end portion or opposite end portions of the tooth main part in the axial direction in a round shape. In this case, although increase in the types of the electromagnetic steel sheets results in increase in the number of processing and assembling steps and the costs, such a round shape can increase the volume of the electromagnetic steel sheets of the tooth, leading to improvement in torque of the electric motor. Insulation paper, resin, insulation coating or the like may be used as an insulation member between the stator coils and the teeth.

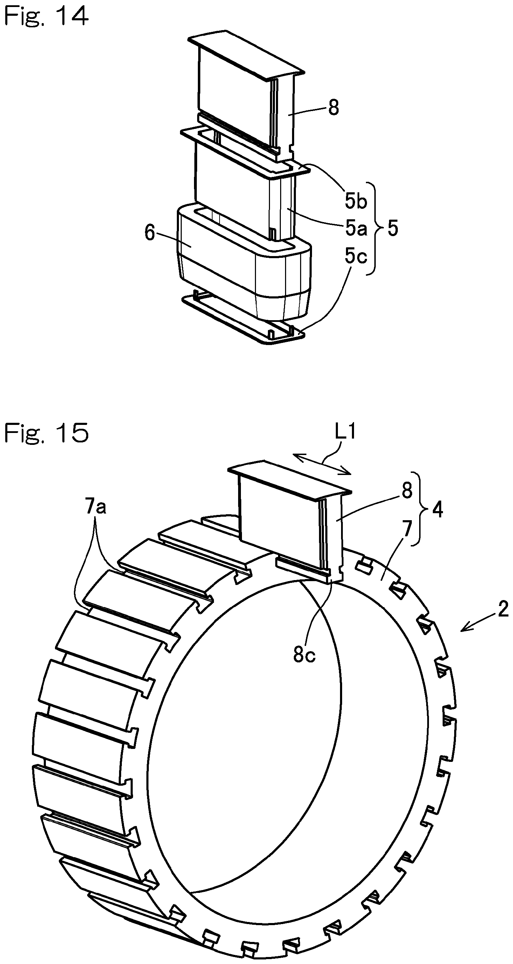

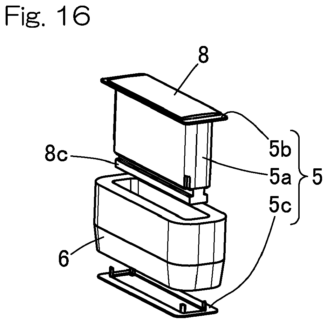

In the bobbin, the bobbin body and the outer-diametric-side and inner-diametric-side flange parts may be united. Alternatively, as shown in Fig. 14 and Fig. 16, the bobbin body 5a and the outer-diametric-side flange part 5b may be united, while the bobbin body 5a and the inner-diametric-side flange part 5c may be separate members that can be joined together. The term "united" herein means that the plurality of parts under consideration are formed as parts of a single object by, for example, forging, machining, or the like from a single material, instead of being constituted by multiple elements joined together. Where the bobbin body 5a and the inner-diametric-side flange part 5c are separate members that can be joined together, the bobbin body 5a and the stator coil 6 can be inserted onto the tooth 8, and then the inner-diametric-side flange part 5c can be attached thereto. This assembly can be inserted into a fitting groove 7a of the annular part 7 in the axial direction L1 as shown in Fig. 10 and Fig. 15.

### <Vehicle Power Device>

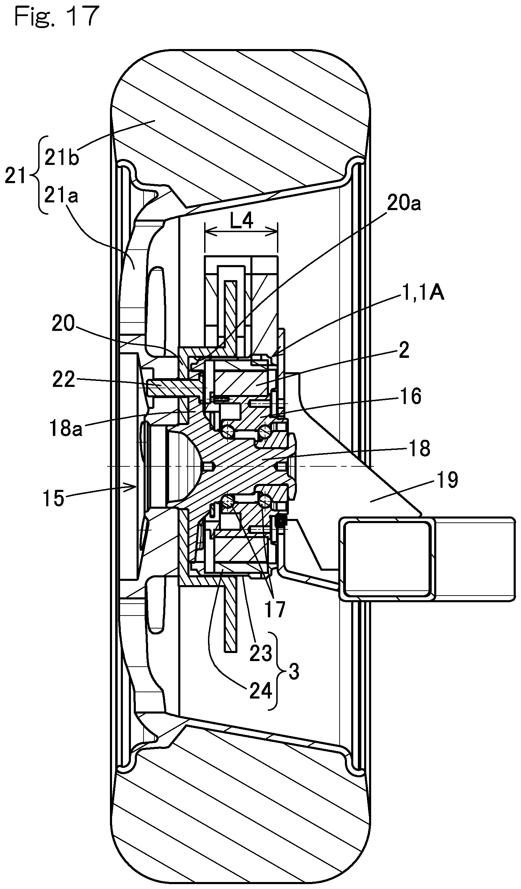

The electric motor according to any of the embodiments may be incorporated in a vehicle power device. As shown in Fig. 17, the vehicle power device includes a wheel bearing 15 and an electric motor 1 attached to the wheel bearing 15. The wheel bearing 15 includes an outer ring 16 as a stationary ring, double rows of rolling elements 17, and an inner ring 18 as a rotary ring. The inner ring 18 is rotatably supported by the outer ring 16 through the double rows of rolling elements 17. Grease is filled in a bearing space between the inner and outer rings 18, 16. The inner ring 18 includes a hub flange 18a at a part protruding toward an outboard side in the axial direction with respect to outer ring 16. The outer ring 16 is attached, at an inboard side end portion thereof, to a chassis frame component 19 such as a knuckle by using a bolt. It should be noted that an "outboard side" as used herein refers to a side closer to an outside of a vehicle in a widthwise direction of the vehicle in which the vehicle power device is mounted, and an "inboard side" refers to a side closer to a center of the vehicle in the widthwise direction of the vehicle.

On an outboard side surface of the hub flange 18a, a brake rotor 20 and a wheel body 21a of a wheel 21 that is a driven wheel are attached in an overlapping manner in the axial direction by using a hub bolt 22. A tire 21b of the wheel 21 is attached to an outer periphery of the wheel body 21a. The wheel bearing 15 and the electric motor 1 are accommodated within an axial width of the wheel body 21a.

A stator 2 of the electric motor 1 is attached to an outer peripheral surface of the outer ring 16, and a rotor 3 is arranged on an outer peripheral side of the stator 2. The rotor 3 includes a rotary case 23, a magnetic body 24 arranged on an inner periphery of the rotary case 23, and a permanent magnet arranged on the magnetic body 24, and the rotary case 23 is attached to the hub flange 18a. On an outer peripheral surface of the hub flange 18a, an outboardside part of an inner peripheral surface of the rotary case 23 is fixed, for example, by fitting, welding, bonding, etc. The electric motor 1 of this example can generate power by rotation of the wheel 21 and rotationally drive the wheel 21 when power is fed to the electric motor.

The electric motor 1 is arranged radially inward with respect to an inner diameter 20a of the brake rotor 20. Further, an entirety of the electric motor 1 excluding an attaching part to the hub flange 18a is located within an axial range L4 between the hub flange 18a and an outboard side surface of the chassis frame component 19. Therefore, no change is necessary in the structure such as a damping device around the wheel 21, for supporting the electric motor 1 by the wheel bearing 15. Further, in the wheel bearing 15, existing components can be used for elements such as the inner ring 18, except for the outer ring.

In this case, the electric motor 1 can be arranged by effectively taking advantage of the space located radially inward with respect to the inner diameter 20a of the brake rotor 20 and in the axial range L4 between the hub flange 18a and the outboard side surface of the chassis frame component 19. The electric motor 1 attached to the wheel bearing 15 can improve driving performance and braking performance to reduce fuel consumption.

### <Generator-Equipped Wheel Bearing>

The vehicle may be provided with a generator-equipped wheel bearing that has a power generation function but is not capable of rotationally driving the wheel when power is fed. This generator-equipped wheel bearing includes a generator 1A that does not serve as a motor and a wheel bearing 15. This generator-equipped wheel bearing has the same constitution as that of the above-described vehicle power device except for the electric motor 1 capable of generating power and rotationally driving the wheel. According to the vehicle including the generator-equipped wheel bearing, for example, the vehicle can generate a braking force by generating regenerative power with the generator 1A.

The electric motor can also be used as a household motor, an industrial motor, a machine tool motor, a robot motor, etc. The generator can be used as a generator for wind power generation or hydroelectric power generation. The electric motor 1 may be an IPM (interior permanent magnet) synchronous motor (or also abbreviated as IPMSM (interior permanent magnet synchronous motor)).

Although the present invention has been described in terms of the preferred embodiments thereof with reference to the drawings, various additions, modifications, or deletions may be made without departing from the scope of the invention. Accordingly, such variants are included within the scope of the present invention.

### [Reference Numerals]

- 1: electric motor
- 1A: generator
- 2: stator
- 3: rotor
- 4: stator core
- 6: stator coil
- 7: annular part
- 7a: fitting groove
- 7aa: narrowed part
- 8: tooth
- 8a: distal end part
- 8b: tooth main part
- 8c: fitting part
- 9: neck part
- 10: protruding part
- 16: outer ring (stationary ring)
- 17: rolling element
- 18: inner ring (rotary ring)
- 18a: hub flange
- 19: chassis frame component
- 20: brake rotor
- 21: wheel

## Claims

1. An electric motor of an outer rotor type comprising: a stator including a stator core and stator coils wound around the stator core, the stator core including an annular part and a plurality of teeth in a circumferential direction which protrude from the annular part radially outward and around which the stator coils are wound; and a rotor facing the stator on a radially outside,
wherein the stator core is divided into the annular part and the plurality of teeth,
each of the teeth includes a distal end part and a tooth main part around which a stator coil is wound, the distal end part having a larger circumferential width than a circumferential width of the tooth main part,
the annular part includes a plurality of fitting grooves in the circumferential direction on an outer peripheral surface thereof, each fitting groove extending in an axial direction and having a sectional shape with a narrowed part on an open side,
each of the teeth includes, at a base end part thereof, a fitting part having a sectional shape that allows the fitting part to be fitted into a fitting groove, the fitting part inserted into the fitting groove of the annular part in the axial direction to be fitted to the annular part in an undetachable manner in a radial direction, and
the fitting part has a maximum width in the circumferential direction smaller than the circumferential width of the tooth main part.

2. The electric motor as claimed in claim 1, wherein each of the teeth with the stator coil wound around the tooth main part is inserted into a fitting groove of the annular part in the axial direction.

3. The electric motor as claimed in claim 1 or 2, wherein the fitting part of each of the teeth includes a neck part that is fitted to a narrowed part of the annular part and a protruding part that protrudes on an inner diametric side toward opposite sides in the circumferential direction with respect to the neck part in the radial direction, the neck part and the protruding part forming a T-shape when viewed in the axial direction, and each of the fitting grooves of the annular part has a T-shaped sectional shape corresponding to the protruding part and the neck part of the fitting part.

4. The electric motor as claimed in any one of claims 1 to 3, wherein in each of the teeth, the circumferential width of the distal end part is 1.1 times to 2.6 times of the circumferential width of the tooth main part.

5. The electric motor as claimed in any one of claims 1 to 4, wherein each of the teeth has a stepped shape in which opposite end portions of the tooth main part in the axial direction are narrower than a middle portion of the tooth main part in the axial direction.

6. The electric motor as claimed in claim 5, wherein in the stepped shape of the tooth main part, each of a step dimension in the axial direction and a step dimension in the circumferential width direction is 0.5 times or more of a coil width dimension in a section of the stator coil along a plane perpendicular to the radial direction of the tooth around which the stator coil is wound.

7. A vehicle power device comprising:
a wheel bearing including a stationary ring and a rotary ring rotatably supported by the stationary ring through rolling elements, the rotary ring including a hub flange configured to be attached with a wheel of a vehicle; and
the electric motor as claimed in any one of claims 1 to 6, the electric motor attached to the wheel bearing,
wherein the stator is attached to the stationary ring, and
the rotor is attached to the rotary ring.

8. The vehicle power device as claimed in claim 7, wherein the wheel and a brake rotor are attached to the hub flange, and the electric motor is arranged radially inward with respect to an inner diameter of the brake rotor and within an axial range between the hub flange and an outboard side surface of a chassis frame component of the vehicle.

9. A generator of an outer rotor type including: a stator including a stator core and stator coils wound around the stator core, the stator core including an annular part and a plurality of teeth in a circumferential direction which protrude from the annular part radially outward and around which the stator coils are wound; and a rotor facing the stator on a radially outside,
wherein the stator core is divided into the annular part and the plurality of teeth,
each of the teeth includes a distal end part and a tooth main part around which a stator coil is wound, the distal end part having a larger circumferential width than a circumferential width of the tooth main part,
the annular part includes a plurality of fitting grooves in the circumferential direction on an outer peripheral surface thereof, each fitting groove extending in an axial direction and having a sectional shape with a narrowed part on an open side,
each of the teeth includes, at a base end part thereof, a fitting part having a sectional shape that allows the fitting part to be fitted into a fitting groove, the fitting part inserted into the fitting groove of the annular part in the axial direction to be fitted to the annular part in an undetachable manner in a radial direction, and
the fitting part has a maximum width in the circumferential direction smaller than the circumferential width of the tooth main part.

10. A generator-equipped wheel bearing device comprising:
a wheel bearing including a stationary ring and a rotary ring rotatably supported by the stationary ring through rolling elements, the rotary ring including a hub flange configured to be attached with a wheel of a vehicle; and
the generator as claimed in claim 9, the generator attached to the wheel bearing,
wherein the stator is attached to the stationary ring, and
the rotor is attached to the rotary ring.
